# EUROPEAN PATENT APPLICATION

(11) **EP 4 848 039 A1**
(43) Date of publication of application: **02.12.2026**
(21) Application number: 25178793.3
(22) Date of filing: 26.05.2025
(51) Int. Cl.: G06F 3/01, G06F 3/0354, G06F 3/0362, G06F 3/038, G06F 3/0485

(54) **COMPUTER PERIPHERAL DEVICE**

(71) Applicant: Société Civile "GALILEO 2011", 98000 Monaco (MC)
(72) Inventor: PASCUCCI, Antonio, 98000 Monaco (MC); FALLI, Emanuele, 80336 München (DE)
(74) Representative: Schmidt, Steffen J.

(57) **Abstract**

A computer peripheral device comprising: a rotor comprising a recess within the rotor; a stator located within the recess of the rotor; wherein one of the rotor and the stator comprises a ferromagnetic material; wherein the other one of the rotor and the stator comprises a plurality of polarized magnets; wherein at least a first one of the plurality of magnets has a first polarity, and at least a second one of the plurality of magnets has a second polarity; wherein the first one of the plurality of magnets and the second one of the plurality of magnets are located adjacent to each other; wherein, when the rotor is in a first position in relation to the stator, the rotor and the stator are configured to generate a first magnetic flux; wherein, when the rotor is in a second position in relation to the stator, the rotor and the stator are configured to generate a second magnetic flux; wherein, when the rotor is in a third position in relation to the stator, the rotor and the stator are configured to generate a third magnetic flux; wherein the first, second and third positions are all different positions; and wherein the first magnetic flux differs from the second magnetic flux, wherein the second magnetic flux differs from the third magnetic flux, and wherein the first magnetic flux differs from the third magnetic flux; a sensor configured to detect a movement of the rotor from the first position, via the second position, to the third position and/or configured to detect a transition from the first magnetic flux, via the second magnetic flux, to the third magnetic flux; and a processor configured to: receive an input signal, from the sensor, comprising input information about the detected movement and/or the detected transition; determine a rotational velocity of the rotor around the stator based on the received input signal; determine, based on the received input signal, when the rotor is decelerating after the rotational velocity determination; and if the determined rotational velocity is above a first predetermined threshold, generate an algorithm for outputting, by the processor, an output signal when the rotor is determined to be decelerating, wherein the output signal comprises output information about an artificial deceleration of the rotor, and wherein the artificial deceleration of the rotor is smaller than an actual deceleration of the rotor.

## Description

### FIELD OF THE INVENTION

The present invention generally relates to a computer peripheral device comprising a rotor comprising a recess within the rotor; and a stator located within the recess of the rotor, a sensor and a processor, and a method for generating an algorithm for outputting an output signal relating to a repetition of a scrolling event.

### BACKGROUND TO THE INVENTION

Every mouse wheel during scrolling is subjected to two opposing forces that work against the rotation: the physical ticks of the wheel and the friction between the mechanical components. High-precision wheels have complex mechanical systems that allows the wheel to disengage the ticks from the system (freewheel mode). In this mode, the only opposing force during scrolling remains friction, and the wheel can therefore spin for a much longer duration and reach higher maximum speed.

There is therefore a need to enhance the scrolling experience of a mechanical mouse wheel by introducing a software-based approach to artificially extend the scrolling duration and dynamically adjust the scrolling speed, creating a smoother and more intuitive experience.

### SUMMARY OF THE INVENTION

The invention is set out in the independent claims. Preferred embodiments of the invention are outlined in the dependent claims. Relevant aspects are also to be found hereinafter.

According to a first aspect, we describe a computer peripheral device comprising: a rotor comprising a recess within the rotor; a stator located within the recess of the rotor; wherein one of the rotor and the stator comprises a ferromagnetic material; wherein the other one of the rotor and the stator comprises a plurality of polarized magnets; wherein at least a first one of the plurality of magnets has a first polarity, and at least a second one of the plurality of magnets has a second polarity; wherein the first one of the plurality of magnets and the second one of the plurality of magnets are located adjacent to each other; wherein, when the rotor is in a first position in relation to the stator, the rotor and the stator are configured to generate a first magnetic flux; wherein, when the rotor is in a second position in relation to the stator, the rotor and the stator are configured to generate a second magnetic flux; wherein, when the rotor is in a third position in relation to the stator, the rotor and the stator are configured to generate a third magnetic flux; wherein the first, second and third positions are all different positions; and wherein the first magnetic flux differs from the second magnetic flux, wherein the second magnetic flux differs from the third magnetic flux, and wherein the first magnetic flux differs from the third magnetic flux; a sensor configured to detect a movement of the rotor from the first position, via the second position, to the third position and/or configured to detect a transition from the first magnetic flux, via the second magnetic flux, to the third magnetic flux; and a processor configured to: receive an input signal, from the sensor, comprising input information about the detected movement and/or the detected transition; determine a rotational velocity of the rotor around the stator based on the received input signal; determine, based on the received input signal, when the rotor is decelerating after the rotational velocity determination; and if the determined rotational velocity is above a first predetermined threshold, generate an algorithm for outputting, by the processor, an output signal when the rotor is determined to be decelerating, wherein the output signal comprises output information about an artificial deceleration of the rotor, and wherein the artificial deceleration of the rotor is smaller than an actual deceleration of the rotor.

The computer peripheral device is preferably a mouse, but can alternatively be a keyboard, a controller, a monitor, a storage device, or any other suitable peripheral devices.

The stator is configured to stay static during operation of the system, and the rotor is configured to rotate during operation of the system, e.g. by a finger of a user using the peripheral device (e.g. wheel on a mouse). The recess may be sized and shaped such that the entirety of the stator is located within the recess, or that only a part of the stator is located within the recess.

The polarized magnets may be located adjacent to one another on the rotor or stator. That is to say, a magnet comprising a first polarity may be directly adjacent to a magnet comprising a second polarity. This is achieved e.g. by pressing and annealing a mixture of permanent magnetic metal powder and a thermoplastic powder in the desired shape of the rotor or stator, and thereafter exposing the rotor or stator to a spatially alternating magnetic field to obtain the desired magnetic configuration.

The first, second and third positions may be any suitable positions of the rotor with respect to the stator. For example, the positions may line up with a subset of the plurality of polarized magnets. In a non-limiting example, the first position may line up with a first magnet with a first polarity, the second position may line up with a first magnet with a second polarity, and the third position may line up with a second magnet with the first polarity. This may allow for the position of the rotor with respect to the stator to be determined via optical means.

The first, second and third magnetic fluxes are based on an interaction between the ferromagnetic magnet and the plurality of polarized magnets. For example, when the rotor is in the first position, at least a portion of the ferromagnetic material may be attracted to one of the polarized magnets, and repelled by the other, leading to a magnetic flux of the system being of a first value. When the rotor is in the second position, the portion of the ferromagnetic material may not be attracted or repelled by the plurality of polarized magnets, or the attraction and repelling forces may be weaker than those when the rotor is in the first position. The same may apply to the third magnetic flux. Each of these positions may lead to a different haptic feedback being felt by a user of the system. In particular, when the rotor is in the first/third position, the haptic feedback felt by the user of the system may comprise a resistive force to the user wanting to change the position of the rotor, and when the rotor is in the second position, the haptic feedback felt by the user of the system comprises a force indicating that the rotor is not in the first/third position. This may allow for the position of the rotor with respect to the stator to be determined via magnetic means.

The sensor may be any suitable sensor configured to detect the movement and/or the transition in magnetic flux. This may mean that the sensor comprises optical and/or magnetic means to detect this movement and/or transition. In some examples, the transition in magnetic fluxes can be detected by a Hall sensor.

The determination of the rotational velocity and/or the determination of deceleration, by the processor, may be based on the input signal received by the processor and/or based on information/data received within the input signal.

The determination of the deceleration of the rotor and the generation of the algorithm, in combination with the determination of the rotational velocity, may relate to an effective priming of outputting of the algorithm, and then outputting the algorithm only when the rotational velocity has reached a predetermined threshold.

The input signal may relate to the rotational velocity and/or deceleration of the rotor, and the output signal may differ from the input signal in that the input signal exactly reflects the rotation of the rotor via the detected movement and/or transition, whereas the output signal relates to an artificial deceleration of the rotor. In addition to, or as an alternative to, the rotational velocity, the input signal may relate to a rotational acceleration of the rotor. In such a case, the processor may be further, or alternatively, configured to:
- determine a rotational acceleration of the rotor around the stator based on the received input signal;
- determine, based on the received input signal, when the rotor is decelerating after the rotational acceleration determination; and
- if the determined rotational acceleration is above a first predetermined threshold, generate an algorithm for outputting, by the processor, an output signal when the rotor is determined to be decelerating, wherein the output signal comprises output information about an artificial deceleration of the rotor, and wherein the artificial deceleration of the rotor is smaller than an actual deceleration of the rotor.

This may allow for a more accurate method of determining the rotational velocity of the rotor, thereby allowing for a more accurate algorithm to be generated by the processor.

In some examples, the rotor and the stator each comprise a substantially circular cross-section. This may allow for a particularly compact system as the stator can be, at least partially, within the rotor. Furthermore, this may be particularly advantageous in the use of wheels, dials and knobs in computer peripheral devices, as the rotor may be directly, or indirectly, interacted with by the user.

In some examples, the ferromagnetic material comprises a protrusion extending toward the plurality of magnets. This may lead to a greater difference between the magnetic fluxes, thereby providing a greater difference between the haptic feedbacks felt by the user when the rotor is in the first and/or second and/or third positions.

In some examples, when the rotor is in the first position, the protrusion is configured to be aligned with a first one of the plurality of magnets or a second one of the plurality of magnets; and when the rotor is in the second position, the protrusion is configured to not be aligned with the first one of the plurality of magnets or the second one of the plurality of magnets. Furthermore, when the rotor is in the third position, the protrusion may be configured to be aligned with the first one of the plurality of magnets or the second one of the plurality of magnets.

As a non-limiting example, when the rotor is in the first and/or third position, a protrusion, comprising a first polarity, may be aligned with a polarized magnet having a second polarity. Resultantly, the polarized magnet may be magnetically attracted to the aligned protrusion, and the protrusion may be repelled by the magnet comprising the first polarity, which is located adjacent to the magnet comprising the second polarity. This may lead to a high attraction force between the rotor and stator, thereby leading to a first haptic feedback comprising haptic information to the user that the rotor is in the first and/or third position. When the rotor is in the second position, the attracting and repelling forces between the rotor and stator may be uneven, resulting in a weaker magnetic flux, and the rotor wanting to return to the first and/or third position. This may mean that the haptic feedback felt by the user of the system comprises haptic information indicating that the system, and rotor, is not in the first and/or third position, leading to a feeling of the rotor wanting to return to said first and/or position. This improves the feedback given to the user, leading to a more accurate determination of the positioning of the rotor. Furthermore, when the rotor is in the first and/or third position, this may allow for a reduction in accidental and unwanted movements of the rotor, leading to a more precise and accurate movement of the rotor.

In some examples, the ferromagnetic material comprises a plurality of protrusions; and the number of plurality of protrusions is equal to the number of the plurality of magnets. This may allow for a more even haptic feedback around the circumference of the rotor as it rotates from the first position to the second position to the third position and *vice versa.*

In some examples, the system further comprises an outer wheel; wherein the outer wheel is coupled to the rotor; wherein the outer wheel is rotatable with the rotor; and wherein the rotor is located between the outer wheel and the stator. The outer wheel may allow for at least one of the following functions:
1) The outer wheel may allow for the provision of more accurate tactile feedback to the user of the system due to, for example, its surface finish;
2) The outer wheel may contribute to the appearance of the system as it is the part of the system that extends out of the computer peripheral device to allow for the user to interact with the system. This, as a result, may indicate where the user should interact with the system; and
3) The outer wheel may add weight/mass to the system, thereby increasing the rotational inertia of the system as a whole. For this purpose, the outer wheel preferably comprises steel, preferably non-ferromagnetic steel (with an austenitic molecular structure), but additionally or alternatively may comprise any other material that adds weight/mass to the system. The material is also preferably one that does not interfere or distort the electromagnetic fields described herein. This may be particularly important in the embodiment where the stator comprises the ferromagnetic material.

In some examples, the system further comprises a system holder, wherein the system holder is configured to keep the stator static. This may allow for the user to receive more accurate haptic feedback on the position of the rotor. The system holder preferably comprises plastic, but may additionally or alternatively may comprise any other material that does not interfere or distort the electromagnetic fields described herein. The system holder may be of any suitable form factor that keeps the stator static.

In some examples, the system further comprises at least one screw, wherein the at least one screw is configured to couple the stator and the system holder. This may allow for the user to receive more accurate haptic feedback on the position of the rotor. Additionally or alternatively, any other suitable means such as, for example, gluing, welding and fixing may be used to couple the stator to the system holder.

In some examples, the rotor and the stator are located within the system holder. This may be advantageous in scenarios where the computer peripheral device can be moved in a lateral and/or longitudinal axis of the through hole described herein. Such a movement may be when, for example, the system is in a mouse, and the user presses down on the system to actuate a "middle click" on a scroll wheel. This may allow for the system to be moved through these axes without interfering with the relative positioning between the rotor and the stator, thereby allowing for the system to still function as described herein.

In some examples, each of the rotor and stator comprises a through hole for an elongated member, and wherein the through holes are aligned with one another. This may allow for a secure coupling between the rotor and the stator. It may also allow for the distance between the rotor and the stator to be kept constant, thereby improving the haptic feedback felt by the user of the system.

In some examples, the rotor is rotatable around a rotational axis of the through hole. This may allow for improved feedback to be given to the user of the system.

In some examples, the system further comprises the elongated member thread through both through holes, wherein a first end of the elongated member is coupled to the system holder. In some examples, the elongated member may be a spindle. The elongated member is preferably a cylindrical component, but can comprise any suitable form, that has an interference fit with the outer wheel, thereby making it a rotatable element. In such a scenario, the system holder may at least partially enclose both sides of the rotor and/or stator, and the elongated member may be positioned within cavities of the system holder. In some examples, there is no interference fit. In some examples, bushing may be used to reduce the rotational friction of the elongated member.

In some examples, the rotor is biased toward the first position and/or third position based on the first magnetic flux being greater than/different to the second magnetic flux and/or the third magnetic flux being greater than/different to the second magnetic flux. This may allow for a reduction in accidental and unwanted movements of the system and/or rotor. This may also allow for a force above a predetermined threshold to be needed to be applied to the rotor before it rotates, thereby allowing the user to be provided with feedback that the rotor is in the first position and/or third position.

In some examples, the computer peripheral device is a mouse, and the system is located within the mouse.

In some examples, upon a rotation of a wheel of the mouse, the rotor is configured to rotate. The rotor preferably has a press fit with the outer wheel in order to transfer any rotation from the outer wheel to the rotor.

In some examples, the input signal comprises a plurality of data input signals, wherein each data input signal indicates an instance of i) the rotor being moved from the first position, via the second position, to the third position and/or ii) the magnetic flux transitioning from the first magnetic flux, via the second magnetic flux, to the third magnetic flux, wherein the processor is configured to determine when the rotor is decelerating based on a time delay between a first instance in a first data input signal of the plurality of data input signals and a second instance in a second data signal of the plurality of data input signals, and wherein the processor is configured to generate the algorithm when the time delay exceeds a second predetermined threshold.

Each instance of the movement and/or transition may be transmitted to the processer in its own signal, thereby leading to a plurality of data input signals. The processor is preferably configured to determine a time delay/time period between each received signal, and determine when the rotor is decelerating based on this delay/period getting longer between each received signal. This may allow for an accurate determination of when the rotor is decelerating, thereby leading to a more accurate outputting of the algorithm and/or output signal.

In some examples, the output signal comprises a plurality of data output signals, wherein each data output signal comprises data relating to a scrolling event for scrolling, via the output signal, on a display of a computer. The term "event" may relate to the outputting of an instruction/data signal, by the processor to a computer/computing device, that the display should be scrolled by a predetermined number of pixels. Each output signal may have a single event. This may allow for an accurate outputting of signals and/or a precise scrolling of the display. In some examples, the output signal may mimic/reflect the input signal in that the output signal may comprise the same information as the input signal relating to the movement/transition described herein.

In some examples, the generated algorithm is configured to output the plurality of data output signals relating to the scrolling event for a longer time period than the rotation of the rotor, and wherein the generated algorithm is configured to output the plurality of data output signals relating to the scrolling event according to a linear artificial deceleration of the rotor. The above may allow for the effect that the rotor is rotating for a longer time period than it actually is, thereby allowing for the scrolling to take place over a longer time period than what is indicated by the actual deceleration/rotation of the rotor. The output signals may allow for the effect that the rotor seems like it has a linear deceleration, which may not be the case in the actual deceleration of the rotor. For example, due to the ticks/changes in magnetic flux mentioned above, the deceleration may increase as the rotor reaches a slower rotational velocity. The output signals may negate this increase in deceleration. For example, the actual deceleration of the rotor may range from -1 rad/s² to -3 rad/s² depending on the velocity of the rotor, but the output signals may create the effect that the rotor is decelerating at a steady -0.8 rad/s². This may allow for a smoother scrolling on the display of the computer.

The above may allow for:
- reduced manufacturing costs as complex hardware modifications may be avoided;
- easier implementation as using firmware updates may allow for a magnetic wheel design to be integrated without complex freewheeling functionalities, which require substantial hardware research and high costs of production;
- the software-based solution may allow for adaptation to various hardware configurations and wheels, providing flexibility in future implementations; and
- reduced power consumption as by artificially extending the duration of scrolling, the rotor/wheel rotates for a reduced time while the scrolling is being simulated, therefore reducing the impact on the battery life that would be caused by a longer scrolling.

In some examples, each of the plurality of data output signals comprises a multiplier relating to the scrolling event, wherein the multiplier relates to a number of pixels to be scrolled on the display of the computer per scrolling event, wherein the multiplier is based on the determined rotational acceleration and/or rotational velocity, wherein the rotational velocity is determined by the processor based on the received input signal, and wherein each of the plurality of data output signals comprises data based on the multiplier being applied to the scrolling event. In some examples, the rotational velocity is based on information received from the sensor via the input signals. The multiplier may relate to the scrolling event, in that if the scrolling event relates to a predetermined number of pixels to be scrolled on the display per scrolling event, the multiplier may increase the number of pixels to be scrolled. As an example, if the predetermined number of pixels to be scrolled were 10 pixels per scrolling event, the multiplier may allow for 20, 30 or 40 pixels to be scrolled on the display per scrolling event. This may allow for a faster scrolling on the display, and for the speed of scrolling to be dependent on the rotational acceleration and/or rotational velocity of the rotor.

In some examples, there is a plurality of multipliers, wherein a first multiplier of the plurality of multipliers is based on the determined rotational acceleration and/or rotational velocity, and a second multiplier of the plurality of multipliers is less than the first multiplier, wherein the plurality of data output signals is output based on the second multiplier being applied to the scrolling event a predetermined time after the plurality of data output signals are output based on the first multiplier being first applied to the scrolling event, and wherein the predetermined time is based on the determined rotational acceleration and/or rotational velocity. This may allow for the number of pixels to be scrolled on the screen to be reduced as the artificial velocity of the rotor decreases, as indicated by the output signals and/or generated algorithm. by reducing the multiplier as the artificial velocity decreases, this may avoid jumps on the display as the output signal frequency reduces, thereby leading to a friendlier user experience. The predetermined time may be based on the rotational acceleration and/or velocity. For example, if the determined velocity was 10rad/s, this may lead to a longer predetermined time than if the determined velocity was 8 rad/s. In some preferred examples, this predetermined time is based on a peak rotational acceleration and/or velocity as determined by the processor.

In some examples, the generated algorithm is configured to alter a first time period between an output of a first data output signal of the plurality of data output signals to which the multiplier has been applied and an output of a second data output signal of the plurality of data output signals to which the multiplier has been applied based on the determined rotational acceleration and/or rotational velocity. This may allow for the frequency of output signals to be reduced as the artificial velocity of the rotor slows, thereby leading to an effect of a steady deceleration of the rotor/scrolling on the display of the computer.

In some examples, a second time period between an output of a penultimate data output signal of the plurality of data output signals relating to the first multiplier applied event and an output of a final data output signal of the plurality of data output signals relating to the first multiplier applied event is longer than a third time period between an output of a first data output signal of the plurality of data output signals relating to the second multiplier applied event and an output of a second data output signal of the plurality of data output signals relating to the second multiplier applied event. This may be important as the artificial velocity of the rotor decreases in order to not provide jumps on the display of the computer. The above may allow for a stair-like descent on the display to be avoided, thereby providing a smoother artificial deceleration of the scrolling, and an improved user experience.

In some examples, a difference between the second and third time periods is dependent on the first and second multipliers. For example, if the first and second multipliers were 3 and 2, respectively, the second time period may be 0.5 seconds, and the third time period may be 0.33 seconds. This may allow for a smooth transition between multipliers as the multiplier decreases. Similarly, if the first and second multipliers where 2 and 1, respectively, the second time period may be 1 second and the third time period may be 0.5 seconds. This may allow, as mentioned above, for a smooth transition between multipliers as the multiplier decreases, thereby creating an effect of a smooth reduction in the artificial velocity of the rotor and/or a liner artificial deceleration of the rotor, and an improved user experience.

In some examples, a time window during which a single multiplier is applied to the scrolling events comprised in the plurality of data output signals, a fourth time period between consecutive output signals increases with time. This may allow for the effect of a smooth deceleration of scrolling to be output onto the display. Within the time window, there may be at least three output signals, wherein the fourth time period between all consecutive signals within the time window increases with time. As an example, within a given time window, a time period between a first output signal and a second output signal may be 0.3 seconds, whereas a time period between a second output signal and a third output signal may be 0.4 seconds.

In some examples, the plurality of data output signals is configured to initially output scrolling events based on a peak rotational velocity of the rotor, wherein the peak rotational velocity is determined by the processor based on the received input signal. This may allow for the actual and artificial rotational velocities of the rotor to begin at the same velocity, thereby creating the effect of the scrolling beginning at the same speed as the actual rotational velocity of the rotor.

In some examples, the device further comprises a capacitive sensor coupled to or integral with the rotor, wherein the capacitive sensor is configured to sense a touch of a user, wherein the capacitive sensor is coupled to the processor, and wherein the algorithm is generated only when the capacitive sensor is not being touched by the user. The capacitive sensor may be any suitable capacitive sensor, and may be of any suitable design to be incorporated into the device and undertake the features as described herein. The processor may be able to determine when the user is touching the capacitive sensor and, as a result, not generate the algorithm. This may allow for the user to have more control of the algorithm generation and/or the scrolling of the display.

In some examples, the output signal is configured to stop being output if, during outputting of the output signal, the user touches the capacitive sensor. This may mean that the processor is configured to immediately stop the outputting of the output signal when the user touches the capacitive sensor. This may allow for the user to have more control of the algorithm generation and/or the scrolling of the display.

In some examples, the processor is configured to continue outputting the output signal based on the generated algorithm after the rotor has been determined, by the sensor, to have stopped rotating around the stator. The above may allow for the effect that the rotor is rotating for a longer time period than it actually is, thereby allowing for the scrolling to take place over a longer time period than what is indicated by the actual deceleration/rotation of the rotor. This may allow for reduced power consumption as by artificially extending the duration of scrolling, the rotor/wheel rotates for a reduced time while the scrolling is being simulated, therefore reducing the impact on the battery life that would be caused by a longer scrolling.

According to a second aspect, we describe a method of generating an algorithm for outputting an output signal relating to a repetition of a scrolling event, the method comprising: receiving by a processor, from a sensor, an input signal comprising input information from the sensor in relation to: i) a detected movement of a rotor, in relation to a stator, from a first position, via a second position, to a third position, wherein the first, second and third positions are all different positions; and/or ii) a detected transition from a first magnetic flux, via a second magnetic flux, to a third magnetic flux, wherein the rotor and the stator are configured to generate the first magnetic flux in the first position, the second magnetic flux in the second position, and the third magnetic flux in the third position, wherein the first magnetic flux differs from the second magnetic flux, wherein the second magnetic flux differs from the third magnetic flux, and wherein the first magnetic flux differs from the third magnetic flux; determining, by the processor, a rotational velocity of the rotor based on the received input signal; determining, by the processor, a deceleration of the rotor based on the received input signal after the rotational velocity determination; generating, by the processor, an algorithm for outputting the output signal when the rotor is determined to be decelerating if the determined rotational velocity is above a predetermined threshold, wherein the output signal comprises output information about an artificial deceleration of the rotor, and wherein the artificial deceleration of the rotor is smaller than an actual deceleration of the rotor.

The first, second and third positions may be any suitable positions of the rotor with respect to the stator. For example, the positions may line up with a subset of the plurality of polarized magnets. In a non-limiting example, the first position may line up with a first magnet with a first polarity, the second position may line up with a first magnet with a second polarity, and the third position may line up with a second magnet with a first polarity. This may allow for the position of the rotor with respect to the stator to be determined via optical means.

The first, second and third magnetic fluxes are based on an interaction between the ferromagnetic magnet and the plurality of polarized magnets. For example, when the rotor is in the first position, at least a portion of the ferromagnetic material may be attracted to one of the polarized magnets, and repelled by the other, leading to a magnetic flux of the system being of a first value. When the rotor is in the second position, the portion of the ferromagnetic material may not be attracted or repelled by the plurality of polarized magnets, or the attraction and repelling forces may be weaker than those when the rotor is in the first position. The same may apply to the third magnetic flux. Each of these positions leads to a different haptic feedback being felt by a user of the system. In particular, when the rotor is in the first position, the haptic feedback felt by the user of the system may comprise a resistive force to the user wanting to change the position of the rotor, and when the rotor is in the second position, the haptic feedback felt by the user of the system comprises a force indicating that the rotor is not in the first position. This may allow for the position of the rotor with respect to the stator to be determined via magnetic means.

The sensor may be any suitable sensor configured to detect the movement and/or the transition in magnetic flux. This may mean that the sensor comprises optical and/or magnetic means to detect this movement and/or transition. In some examples, the transition in magnetic fluxes can be detected by a Hall sensor.

The determination of the rotational velocity and/or the determination of deceleration, by the processor, may be based on the input signal received by the processor and/or based on information/data received within the input signal.

The determination of the deceleration of the rotor and the generation of the algorithm, in combination with the determination of the rotational velocity, may relate to an effective priming of outputting of the algorithm, and then outputting the algorithm only when the rotational velocity has reached a predetermined threshold.

The input signal may relate to the rotational velocity and/or deceleration of the rotor, and the output signal may differ from the input signal in that the input signal exactly reflects the rotation of the rotor via the detected movement and/or transition, whereas the output signal relates to an artificial deceleration of the rotor. In addition to, or as an alternative to, the rotational velocity, the input signal may relate to a rotational acceleration of the rotor. In such a case, the processor may be further, or alternatively, configured to:
- determining, by the processor, a rotational acceleration of the rotor based on the received input signal;
- determining, by the processor, a deceleration of the rotor based on the received input signal after the rotational acceleration determination;
- generating, by the processor, an algorithm for outputting the output signal when the rotor is determined to be decelerating if the determined rotational acceleration is above a predetermined threshold, wherein the output signal comprises output information about an artificial deceleration of the rotor, and wherein the artificial deceleration of the rotor is smaller than an actual deceleration of the rotor.

This may allow for a more accurate method of determining the rotational velocity of the rotor, thereby allowing for a more accurate algorithm to be generated by the processor.

In some examples, the generated algorithm is generated based on a rotational velocity of the rotor and a direction in which the rotor was rotated. This may allow for a more accurate algorithm generation and so, a more accurate outputting of the output signal.

Additionally or alternatively, the generated algorithm is generated based on a duration of rotation of the rotor before the rotor is determined, by the processor, to be decelerating. This may allow for a more accurate algorithm generation and so, a more accurate outputting of the output signal.

In some examples, a duration of outputting of the output signal, by the generated algorithm, is dependent on a duration of rotation of the rotor before the rotor is determined, by the processor, to be decelerating and/or a rotational acceleration of the rotor and/or a rotational velocity of the rotor. This may allow for the algorithm, and output signal, to be altered based on the input signal, thereby allowing for a more accurate algorithm generation and so, a more accurate outputting of the output signal.

Any features, advantages and effect described in relation to the first aspect may also apply to the second aspect, and *vice versa.*

The device and method described herein may allow for:
- reduced manufacturing costs as complex hardware modifications may be avoided;
- easier implementation as using firmware updates may allow for a magnetic wheel design to be integrated without complex freewheeling functionalities, which require substantial hardware research and high costs of production;
- the software-based solution may allow for adaptation to various hardware configurations and wheels, providing flexibility in future implementations; and
- reduced power consumption as by artificially extending the duration of scrolling, the rotor/wheel rotates for a reduced time while the scrolling is being simulated, therefore reducing the impact on the battery life that would be caused by a longer scrolling.

It is clear to a person skilled in the art that the statements set forth herein may be implemented under use of hardware circuits, software means, or a combination thereof. The software means can be related to programmed microprocessors or a general computer, an ASIC (Application Specific Integrated Circuit) and/or DSPs (Digital Signal Processors). For example, the processing unit may be implemented at least partially as a computer, a logical circuit, an FPGA (Field Programmable Gate Array), a processor (for example, a microprocessor, microcontroller (µC) or an array processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP.

### BRIEF DESCRIPTION OF THE DRAWINGS

These and other aspects of the invention will now be further described, by way of example only, with reference to the accompanying figures, wherein like reference numerals refer to like parts, and in which:
- Figures 1a and 1b: show a cross-sectional view and a perspective view of a first implementation of a haptic feedback system according to some examples as described herein;
- Figures 2a and 2b: show a rotational part and a stationary part of a first implementation of a haptic feedback system according to some examples as described herein;
- Figures 3a and 3b: show magnetic flux diagrams of a first implementation of a haptic feedback system according to some examples as described herein;
- Figures 4a and 4b: show a cross-sectional view and a perspective view of a second implementation of a haptic feedback system according to some examples as described herein;
- Figures 5a and 5b: show a rotational part and a stationary part of a second implementation of a haptic feedback system according to some examples as described herein;
- Figures 6a and 6b: show magnetic flux diagrams of a second implementation of a haptic feedback system according to some examples as described herein;
- Figure 7: shows graphs relating to algorithm generation according to some examples as described herein; and
- Figure 8: shows a block diagram of a system according to some examples as described herein.

### DETAILED DESCRIPTION OF THE INVENTION

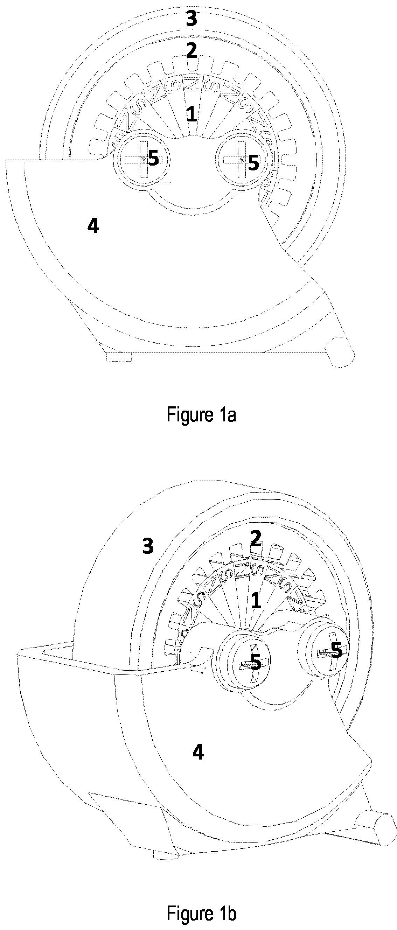

Figures 1a and 1b show a cross-sectional view and a perspective view of a first implementation of a haptic feedback system according to some examples as described herein.

As can be seen in figures 1a and 1b, the system comprises a stator 1, a rotor 2, an outer wheel 3, a system holder 4, and screws 5. In order for the invention, as described herein, to be carried out, only the stator 1 and rotor 2, as hardware components, are required, and the other elements are for supporting the stator 1 and rotor 2, and for further enhancing the usability of the system, in addition to the technical effects mentioned herein.

In this example, the stator 1 comprises a plurality of polarized magnets, and the rotor 2 comprises a ferromagnetic material.

Both the stator 1 and the rotor 2 comprise a circular cross-section, with the rotor 2 comprising a recess in which the stator 1 is completely contained. That is to say, when looking at a cross-section of the system, the rotor 2 and stator 1 are concentric within one another. In some examples, the rotor 2 may be relatively offset from the stator 1, leading to only a part of the stator 1 being located within the recess of the rotor 2.

The polarized magnets of the stator 1 comprise first polarities and second polarities, wherein magnets of different polarities are located adjacent to each other, leading to an alternating pattern of magnets comprising a first polarity and a second polarity around the stator 1. That is to say, the stator comprises a magnet of a first polarity located adjacent to a magnet of a second polarity, which is located adjacent to a second magnet of a first polarity and so on around the stator 1. The number of polarized magnets around the stator 1 is even due to this being needed to create the haptic feedback described herein. There may be any number of polarized magnets in the stator 1, as long as this number is even. In the example of figures 1a and 1b, there are 24 magnets, but the skilled person understands that this number may be increased or reduced based on the size of the system, and the end use of the system.

The rotor 2, in this example, comprises a plurality of protrusions extending towards the stator 1. In particular, the number of protrusions is equal to the number of polarized magnets on the stator 1. The skilled person understands that the number of protrusions on the rotor 2 and the number of polarized magnets on the stator 1 may be unequal, as long as the haptic feedback effect described herein is achieved. In an example, if the number of protrusions was less than the number of polarized magnets, as long as the angular spacing between the polarized magnets was the same as that between the protrusions, the invention described herein would still function. For example, using the embodiment seen in figures 1a and 1b, if the upper half of protrusions on the rotor 2 were removed, only half of the force would be generated with respect to the embodiment seen in figures 1a and 1b. This would result in a reduced tactile feedback given to the user, but this feedback would still be noticeable to said user.

The outer wheel 3 is located on the outer circumference of the rotor and is configured to add rotational inertia and/or weight and/or mass to the system. This results in an improved tactile feedback given to the user, as well as an improved visual experience.

The system holder 4 is located adjacent to, but does not contact, an outer circumference of the outer wheel 3, but it is to be understood that if the outer wheel 3 is not present, the system holder 4 is located adjacent to, but does not contact, an outer circumference of the rotor 2. The system holder 4 is configured to fix the entire system in place, and to ensure that the stator 1 is kept in place via the use, in this example, of screws 5. The skilled person understands that methods other than screws 5 such as, for example, gluing, welding and fixing, may be used to ensure the stator 1 stays static. In some examples, such as the one shown in figures 1a and 1b, the system holder 4 encompasses only a portion of the stator 1, rotor 2 and outer wheel 3, but in other examples, the system holder 4 may entirely encompass the stator 1, rotor 2 and outer wheel 3.

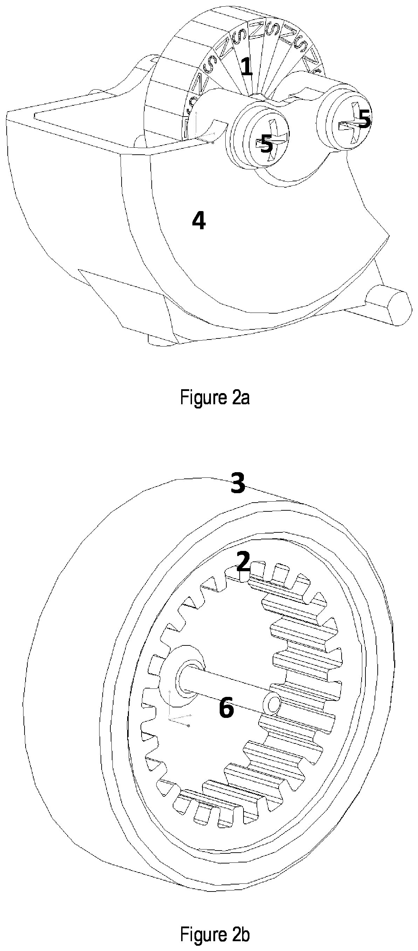

Figure 2a and 2b show a rotational part and a stationary part of a first implementation of a haptic feedback system according to some examples as described herein.

In figure 2a, the stationary part of the system is shown. That is to say, figure 2a shows the section of the system that does not move during use of the system. The stator 1 is coupled to the system holder 4 via the screws 5.

In figure 2b, the rotational part of the system is shown. That is to say, figure 2b shows the section of the system that does move during use of the system. Here, both the rotor 2 and the outer wheel 3 rotate around an elongated member 6. The elongated member 6 is thread through a first through hole located in the center of the stator 1 and a second through hole located in the center of the rotor 2. A first end of the elongated member 6 is then coupled to the system holder 4 in order to keep the rotor 2 in place as it rotates. The second end is also preferably coupled to the system holder 4, thereby allowing for the elongated member 6 to stay stationary with respect to the system holder 4. In some examples, the outer wheel 3 may and/or rotor 2 may be coupled to the elongated member 6 via an interference fit to ensure a secure coupling between these elements. In this example, the elongated member 6 rotates with the rotor 2 and outer wheel 3, but in other examples, the elongated member 6 may be a stationary element.

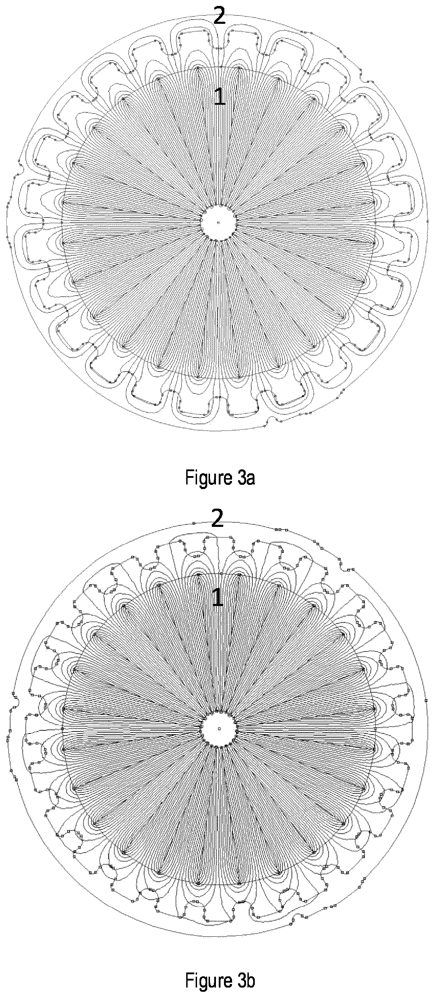

Figure 3a and 3b show magnetic flux diagrams of a first implementation of a haptic feedback system according to some examples as described herein.

Figure 3a shows a "stable" position of the system. That is to say, when rotor 2 is in a first/third position with respect to the stator 1, the system has a first/third magnetic flux.

Figure 3b shows an "unstable" position of the system. That is to say, when rotor 2 is in a second position with respect to the stator 1, the system has a second magnetic flux, wherein the first magnetic flux is greater/different than the second magnetic flux, and wherein the third magnetic flux is greater/different than the second magnetic flux.

In particular, the "stable" position is achieved when a protrusion of the rotor 2 is aligned with a center of a polarized magnet. For example, when a protrusion, comprising a first polarity, is aligned with polarized magnet having a second polarity, the rotor will be magnetically attracted to the aligned protrusion, and the protrusion will be repelled by the magnets located either side of the polarized magnet, which each have a first polarity. This happens, in this example, with every second protrusion, leading to a stable positioning of the rotor 2, and therefore, system. This attractive force is counteracted by every other protrusion where said protrusions are aligned with a magnet having a same polarity, and is attracted by the magnets located either side of the polarized magnet it is aligned with. This may mean that the haptic feedback felt by the user of the system comprises a resistive force to the user wanting to change the position of the rotor 2 and/or state of the system. This, in turn, may allow for a reduction in accidental and unwanted movements of the system and/or rotor 2.

The "unstable" position is achieved when a protrusion of the rotor 2 is not aligned with a center of a polarized magnet. As the attracting and repelling forces are uneven in such a scenario. This results in a weaker magnetic flux, and the rotor 2 wanting to return to the "stable" position. This may mean that the haptic feedback felt by the user of the system comprises a force indicating that the system is not in the "stable" position, leading to a feeling of the rotor 2 and/or system wanting to return to said "stable" position which results in a biasing force towards the "stable" position.

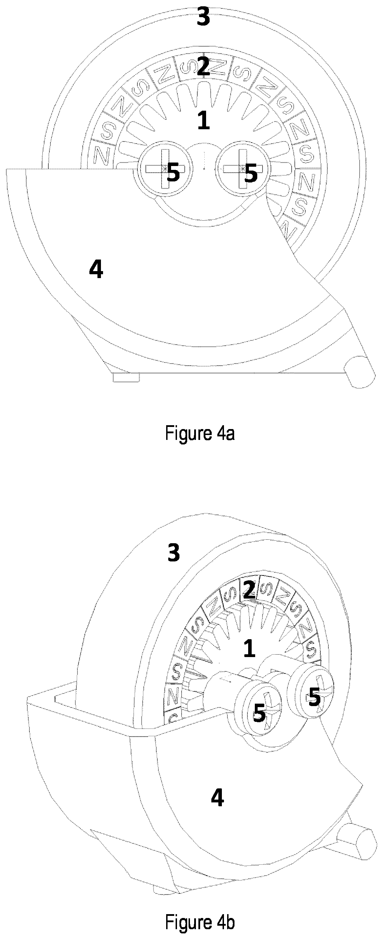

Figure 4a and 4b show a cross-sectional view and a perspective view of a second implementation of a haptic feedback system according to some examples as described herein.

Here, reference signs used in figures 1a and 1b are the same as those as figures 4a and 4b. The difference between figures 1a and 1b and figures 4a and 4b is that the rotor 2 comprises the plurality of polarized magnets, and the stator 1 comprises the ferromagnetic material. The outer wheel 3, system holder 4 and screws 5 still function in the same way as in figures 1a and 1b.

It can be additionally seen in these figures that the protrusions of the stator 1 extend outward towards the rotor 2, as opposed to inwards towards the stator 1, as seen in figures 1a and 1b.

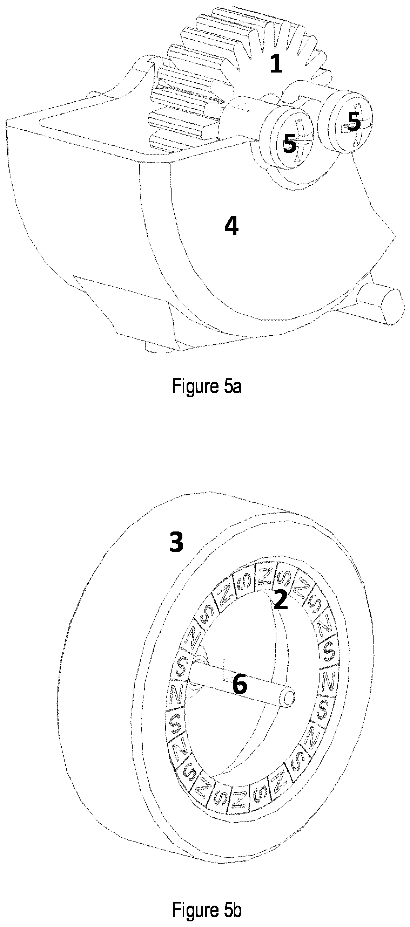

Figure 5a and 5b show a rotational part and a stationary part of a second implementation of a haptic feedback system according to some examples as described herein.

As only the magnetic materials of the stator 1 and the rotor 2 have been swapped when compared to figures 2a and 2b, the elements of figures 5a and 5b function in the same manner.

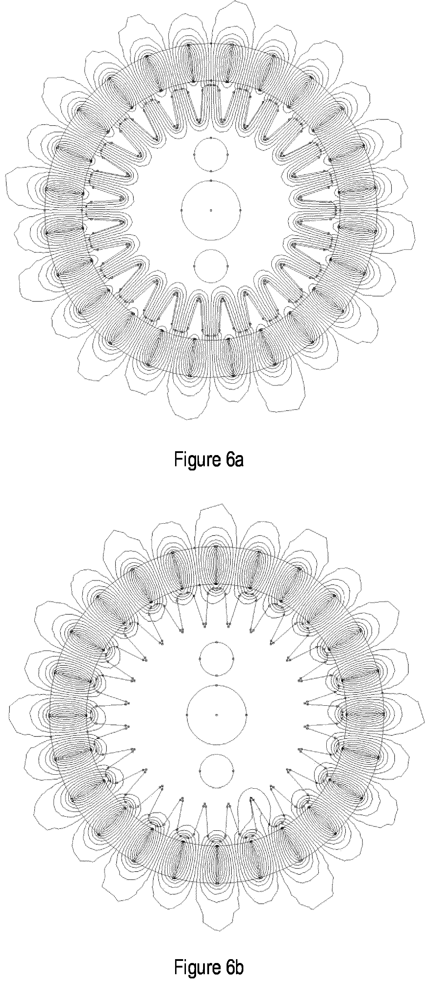

Figure 6a and 6b show magnetic flux diagrams of a second implementation of a haptic feedback system according to some examples as described herein.

Again, as only the magnetic materials of the stator 1 and the rotor 2 have been swapped when compared to figures 3a and 3b, the elements of figures 6a and 6b in relation to the "stable" and "unstable" positions function in the same manner.

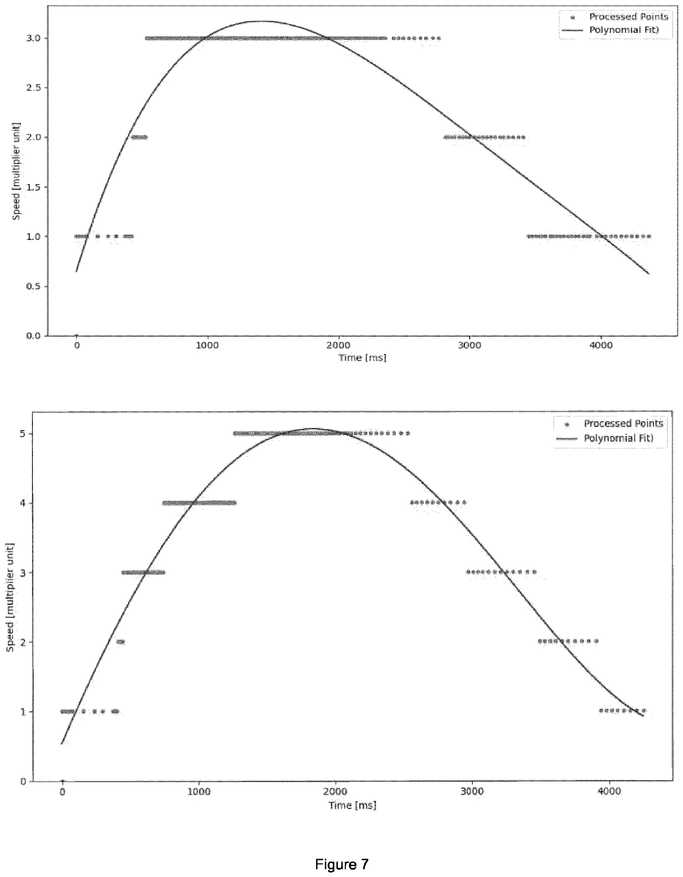

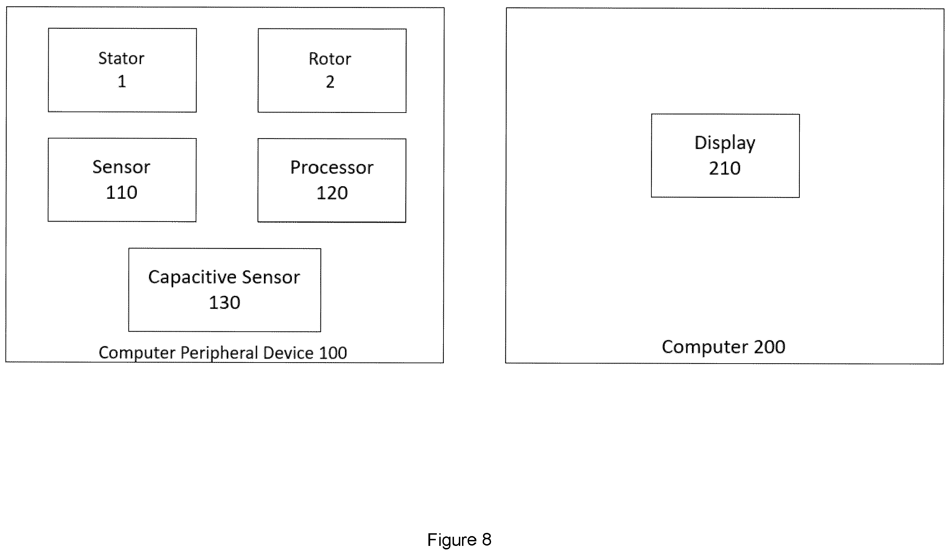

Figure 7 shows graphs relating to algorithm generation according to some examples as described herein. Figure 8 shows a block diagram of a system according to some examples as described herein.

In combination with the above hardware description, the below software description may be used.

The physical ticks/haptic feedback is, in the above example, always engaged and may present limitations in that the rotor 2 stops spinning quickly as the magnetic forces cause an abrupt end to scrolling when the rotation slows down. The inability to remove the magnetic ticks/haptic feedback may reduce the total scrolling duration from 12 seconds to around half of the time. Additionally, the physical design of the hardware restricts its ability to provide a smooth extended scrolling effect. It therefore may not be possible to reach the full scrolling distance possible, as seen with freewheeling designs, without altering the scrolling with the software described below.

An objective of the invention described herein is to enhance the scrolling experience of a mechanical mouse wheel/computer peripheral device 100 by introducing a software-based approach to artificially extend the scrolling duration and dynamically adjust the scrolling speed, creating a smoother and more intuitive experience.

This may allow for:
- reduced manufacturing costs as complex hardware modifications may be avoided;
- easier implementation as using firmware updates may allow for a magnetic wheel/computer peripheral device 100 design to be integrated without complex freewheeling functionalities, which require substantial hardware research and high costs of production;
- the software-based solution may allow for adaptation to various hardware configurations and wheels, providing flexibility in future implementations; and
- reduced power consumption as by artificially extending the duration of scrolling, the rotor 2/wheel rotates for a reduced time while the scrolling is being simulated, therefore reducing the impact on the battery life that would be caused by a longer scrolling.

The type of data that the computer peripheral device 100, and the rotor 2 in particular, exchanges with the computer interface in order to generate a scrolling event is described herein. A scrolling event may be defined as an integer value with positive or negative sign, that determines a movement of the page on the display 210 of a computer 200 by a predetermined number of pixels or lines. The positive and negative sign may relate to the direction the rotor has been rotated in.

This predefined number of pixels/lines can be modified by the user in the Windows settings. However, it is always an integer value, and cannot represent a fractional value of the integer. Therefore, an important problem, which is solved by the presently disclosed invention, relates to the dynamic speed adjustment. This may mean that the rotational velocity of the rotor 2, as defined by the algorithm described below, may be modified in order to elongated the effective duration of the rotation of the rotor 2 and/or smoothen the effective deceleration of the rotor 2, as seen by a user on a display 210. In this case, when increasing the speed of scrolling, the scrolling may be a multiple of the predefined number of scrolls/lines/pixels, and not a fraction of it.

The two parameters that can define the speed of scrolling are the multiplication of the default number of lines to be scrolled, and the delay that can be introduced between subsequent scroll events. These two variables may influence the total duration of scrolling and can be tuned to achieve a smooth ending/reduction in effective rotational velocity of a rotor 2.

The processor 120 may be able to detect a number of rotations of the rotor 2 via the sensor 110.

The rotations may be determined via one, or both, of the following methods.

When the rotor 2 is in a first position in relation to the stator 1, the rotor 2 and the stator 1 are configured to generate a first magnetic flux, when the rotor 2 is in a second position in relation to the stator 1, the rotor 2 and the stator 1 are configured to generate a second magnetic flux, and when the rotor 2 is in a third position in relation to the stator 1, the rotor 2 and the stator 1 are configured to generate a third magnetic flux. The first, second and third positions are all different positions, and the first magnetic flux differs from the second magnetic flux, the second magnetic flux differs from the third magnetic flux, and the first magnetic flux differs from the third magnetic flux.

The first, second and third positions may be any suitable positions of the rotor 2 with respect to the stator 1. For example, the positions may line up with a subset of the plurality of polarized magnets. In a non-limiting example, the first position may line up with a first magnet with a first polarity, the second position may line up with a first magnet with a second polarity, and the third position may line up with a second magnet with a first polarity. This may allow for the position of the rotor 2 with respect to the stator 1 to be determined via optical means.

The first, second and third magnetic fluxes are based on an interaction between the ferromagnetic magnet and the plurality of polarized magnets. For example, when the rotor 2 is in the first position, at least a portion of the ferromagnetic material may be attracted to one of the polarized magnets, and repelled by the other, leading to a magnetic flux of the system being of a first value. When the rotor 2 is in the second position, the portion of the ferromagnetic material may not be attracted or repelled by the plurality of polarized magnets, or the attraction and repelling forces may be weaker than those when the rotor 2 is in the first position. The same may apply to the position of the rotor 2 and the third magnetic flux. Each of these positions leads to a different haptic feedback being felt by a user of the system. In particular, when the rotor 2 is in the first/third position, the haptic feedback felt by the user of the system may comprise a resistive force to the user wanting to change the position of the rotor 2, and when the rotor 2 is in the second position, the haptic feedback felt by the user of the system comprises a force indicating that the rotor 2 is not in the first/third position. This may allow for the position of the rotor 2 with respect to the stator 1 to be determined via magnetic means.

The sensor 110 may be any suitable sensor configured to detect the movement and/or the transition in magnetic flux. This may mean that the sensor 110 comprises optical and/or magnetic means to detect this movement and/or transition. In some examples, the transition in magnetic fluxes can be detected by a Hall sensor.

The sensor 110 is configured to transmit this data to the processor 120, and the processor 120 is configured to determine a rotational velocity of the rotor 2 and, in some examples, a rotational acceleration of the rotor 2 based on the input signal relating to the data transmitted by the sensor 110.

If the determined rotational velocity exceeds a predetermined threshold, the processor 120 can determine that the user of the device 100 has "flicked" the rotor 2, thereby allowing for an algorithm relating to the output signal to be generated. Additionally or alternatively, this threshold may be based on the rotational acceleration of the rotor 2 determined by the processor 120.

Furthermore, the device 100 may comprise a capacitive sensor 130, wherein the algorithm is generated by the processor 120 only when the user is not touching the capacitive sensor 130. This may allow for more control over the scrolling/output signal.

Figure 7 shows graphs of the algorithm described herein. It can be seen that the graphs relate to speed of rotation of the rotor 2 and time, wherein the "tail" of the graph, after the peak rotational velocity has been reached, corresponds to the algorithm described herein. It can be seen in these graphs that the frequency of output signals, wherein each output signal may comprise a scrolling event, decreases as the artificial rotational velocity of the rotor 2 decreases. This may allow for a smooth artificial deceleration of the rotor 2, and a smooth deceleration of scrolling as seen on the display 210.

The processor 120, via the sensor 110, in this example, starts measuring the number of ticks, via the above-described optical and/or magnetic means, encoded during the rotation. Reaching multiple rotations of the rotor 2 triggers an increase in rotational velocity and/or acceleration, as determined by the processor 120, therefore faster flicks trigger higher multipliers of scrolling events, allowing the device 100 to match the performance of devices with more complex mechanical designs. This amplified speed blends with the generated algorithm, creating a smooth, continuous curve from start to finish. The maximum rotational velocity of the rotor 2 not only depends according to the initial flick force, but also adapts to the direction of the flick, in order to match the two curves when scrolling downwards and upwards.

In this state, the firmware may allow for the rotor 2 to rotate to its mechanical ability, and leverage the magnetic design to reach the total duration of scrolling, while only adjusting the rotational velocity according to the generated algorithm, thereby creating an artificial decrease in rotational velocity of the rotor 2. No other adjustments may be needed to be made to the delay introduced between subsequent scrolling event.

If the user's finger was released from the rotor 2, as determined by the capacitive sensor 130, and the mechanical rotation of the rotor 2 has reached the threshold required to generate the algorithm, the algorithm may wait until the time span between two subsequent ticks, or other events as measured by the sensor 110, has overcome a threshold. This informs the processor 120 that the rotor 2 is decelerating, and that the algorithm can be executed.

An artificial tail effect, as dictated by the output signal generated by the algorithm, allows for scrolling on-screen to continue after the rotor 2 physically stops. This tail mimics natural deceleration of the rotor 2 in an artificial manner, wherein the tail's length and speed are adaptive, meaning they depend on how forcefully the user flicks the wheel/rotor 2 and/or the (peak) rotational acceleration of the rotor 2 and/or the (peak) rotational velocity of the rotor 2. For example, a hard flick creates a longer tail, while a gentle flick creates a shorter one. The tail, i.e. the algorithm, preferably starts at the same peak rotational velocity reached by the rotor 2 during rotation, and follows a linear descent, via linear deceleration and/or a linear velocity decrease, up to a stop. In particular here, on top of the dynamic speed adjustment, a change in the delay with which the scrolling events are output by the processor 120, to the computer 200, may be executed. By doing so, it is possible to mimic a more linear velocity/deceleration decrease of the rotor 2 in two ways:
- The delay between subsequent scrolls in the algorithm may linearly increase with each new event.

That is to say, in some examples, a time window during which a single multiplier (described below) is applied to the scrolling events comprised in the plurality of data output signals, a time period between consecutive output signals increases with time. This may allow for the effect of a smooth deceleration of scrolling to be output onto the display 210. Within the time window, there may be at least three output signals, wherein the time period between all consecutive signals within the window increases with time. As an example, within a given time window, a time period between a first output signal and a second output signal may be 0.3 seconds, whereas a time period between a second output signal and a third output signal may be 0.4 seconds.
- When the velocity is decreased in the artificial manner via the algorithm, the delay between the output scrolling events may be decreased, as the multiplier is also decreased, in order to compensate for the reduction in number of lines being scrolled. Without doing so, the user would notice a stair-like descent during the reduction of the artificial velocity of the rotor 2.

That is to say, in some examples, each of the plurality of data output signals comprises a multiplier relating to the scrolling event, wherein the multiplier relates to a number of pixels to be scrolled on the display 210 of the computer 200 per scrolling event, wherein the multiplier is based on the determined rotational acceleration and/or rotational velocity, wherein the rotational velocity is determined by the processor 120 based on the received input signal, and wherein each of the plurality of data output signals comprises data based on the multiplier being applied to the scrolling event. In some examples, the rotational velocity is based on information received from the sensor 110 via the input signals. The multiplier may relate to the scrolling event, in that if the scrolling event relates to a predetermined number of pixels to be scrolled on the display 210 per scrolling event, the multiplier may increase the number of pixels to be scrolled. As an example, if the predetermined number of pixels to be scrolled were 10 pixels per scrolling event, the multiplier may allow for 20, 30 or 40 pixels to be scrolled on the display 210 per scrolling event. This may allow for a faster scrolling on the display 210, and for the speed of scrolling to be dependent on the rotational acceleration and/or rotational velocity of the rotor 2.

In some examples, there is a plurality of multipliers, wherein a first multiplier of the plurality of multipliers is based on the determined rotational acceleration and/or rotational velocity, and a second multiplier of the plurality of multipliers is less than the first multiplier, wherein the plurality of data output signals is output based on the second multiplier being applied to the scrolling event a predetermined time after the plurality of data output signals are output based on the first multiplier being first applied to the scrolling event, and wherein the predetermined time is based on the determined rotational acceleration and/or rotational velocity. This may allow for the number of pixels to be scrolled on the screen to be reduced as the artificial velocity of the rotor 2 decreases, as indicated by the output signals and/or generated algorithm. by reducing the multiplier as the artificial velocity decreases, this may avoid jumps on the display 210 as the output signal frequency reduces, thereby leading to a friendlier user experience. The predetermined time may be based on the rotational acceleration and/or velocity. For example, if the determined velocity was 10rad/s, this may lead to a longer predetermined time than if the determined velocity was 8 rad/s. In some preferred examples, this predetermined time is based on a peak rotational acceleration and/or velocity as determined by the processor 120.
- This reduction in delay, as mentioned above, may compensate the difference in multipliers to avoid the jumps that would be seen on-screen. Going from a multiple of 3 to 2 the delay needs to be reduced less than it would be when going from 2 to 1.

In some examples, a time period between an output of a penultimate data output signal of the plurality of data output signals relating to the first multiplier applied event and an output of a final data output signal of the plurality of data output signals relating to the first multiplier applied event is longer than a time period between an output of a first data output signal of the plurality of data output signals relating to the second multiplier applied event and an output of a second data output signal of the plurality of data output signals relating to the second multiplier applied event. This may be important as the artificial velocity of the rotor 2 decreases in order to not provide jumps on the display 210 of the computer 200. The above may allow for a stair-like descent on the display 210 to be avoided, thereby providing a smoother artificial deceleration of the scrolling, and an improved user experience.

In some examples, a difference between the above time periods is dependent on the first and second multipliers. For example, if the first and second multipliers were 3 and 2, respectively, the second time period may be 0.5 seconds, and the third time period may be 0.33 seconds. This may allow for a smooth transition between multipliers as the multiplier decreases. Similarly, if the first and second multipliers where 2 and 1, respectively, the second time period may be 1 second and the third time period may be 0.5 seconds. This may allow, as mentioned above, for a smooth transition between multipliers as the multiplier decreases, thereby creating an effect of a smooth reduction in the artificial velocity of the rotor 2 and/or a liner artificial deceleration of the rotor 2, and an improved user experience.

The firmware may, in some examples, not store any predetermined value that controls the artificial scrolling. In some examples, the delay value is not predetermined, but starts from the initial delay that was encoded by the rotor 2 and is gradually increased to simulate a smooth ending of the scroll. This value may not always have the same progression, but it is influenced by the number of scrolls that may be determined at the beginning of the algorithm generation.

In some examples, as mentioned above, the device 100 may further comprise a capacitive sensor 130. This may allow for the device 100 to detect when the user touches the rotor 2, enabling immediate interruption of the output signals. Much like a touch-pad on a laptop, this capacitive sensor 130 may detect when a finger is placed on top of the rotor 2, which traditional mouse wheels/computer peripheral devices are ineffective at doing. The capacitive touch system may preferably use a metal strip inside the device 100/rotor 2 acting as an electrode. A metal ring, which may surround the rotor 2, may act as the second electrode, thus creating a capacitor with air acting as a dielectric in between the two electrodes.

When a finger touches the rotor 2, it generates a detectable change in capacitance, which can be detected by the capacitive sensor 130, which may be utilized to inform the processor 120 when the finger has been placed on the rotor 2, or lifted from it. This may ensure reliable touch detection, even when the wheel is not moving, and allows users to stop the outputting of output signals with a light touch. At any point during the scrolling, either mechanical or artificial via the algorithm, a touch on the preferably causes the output relating to the scrolling events to stop, thereby stopping scrolling on the display 210 of the computer 200, to which the device 100 is coupled. This approach may give total control to the user to initiate a new flick without allowing the artificial rotation to finish.

As can be seen in figure 8, the device 100 comprises the rotor 2, the stator 1, the sensor 110, the processor 120 and the capacitive sensor 130, whereas the computer 200 comprises the display 210 on which the scrolling is displayed.

No doubt many other effective alternatives will occur to the skilled person. It will be understood that the invention is not limited to the described embodiments and encompasses modifications apparent to those skilled in the art and lying within the scope of the claims appended hereto.

## Claims

1. A computer peripheral device comprising:
a rotor comprising a recess within the rotor;
a stator located within the recess of the rotor;
wherein one of the rotor and the stator comprises a ferromagnetic material;
wherein the other one of the rotor and the stator comprises a plurality of polarized magnets;
wherein at least a first one of the plurality of magnets has a first polarity, and at least a second one of the plurality of magnets has a second polarity;
wherein the first one of the plurality of magnets and the second one of the plurality of magnets are located adjacent to each other;
wherein, when the rotor is in a first position in relation to the stator, the rotor and the stator are configured to generate a first magnetic flux;
wherein, when the rotor is in a second position in relation to the stator, the rotor and the stator are configured to generate a second magnetic flux;
wherein, when the rotor is in a third position in relation to the stator, the rotor and the stator are configured to generate a third magnetic flux;
wherein the first, second and third positions are all different positions; and
wherein the first magnetic flux differs from the second magnetic flux, wherein the second magnetic flux differs from the third magnetic flux, and wherein the first magnetic flux differs from the third magnetic flux;
a sensor configured to detect a movement of the rotor from the first position, via the second position, to the third position and/or configured to detect a transition from the first magnetic flux, via the second magnetic flux, to the third magnetic flux; and
a processor configured to:
receive an input signal, from the sensor, comprising input information about the detected movement and/or the detected transition;
determine a rotational velocity of the rotor around the stator based on the received input signal;
determine, based on the received input signal, when the rotor is decelerating after the rotational velocity determination; and
if the determined rotational velocity is above a first predetermined threshold, generate an algorithm for outputting, by the processor, an output signal when the rotor is determined to be decelerating, wherein the output signal comprises output information about an artificial deceleration of the rotor, and wherein the artificial deceleration of the rotor is smaller than an actual deceleration of the rotor.

2. The device of claim 1, wherein the input signal comprises a plurality of data input signals, wherein each data input signal indicates an instance of i) the rotor being moved from the first position, via the second position, to the third position and/or ii) the magnetic flux transitioning from the first magnetic flux, via the second magnetic flux, to the third magnetic flux,
wherein the processor is configured to determine when the rotor is decelerating based on a time delay between a first instance in a first data input signal of the plurality of data input signals and a second instance in a second data signal of the plurality of data input signals, and wherein the processor is configured to generate the algorithm when the time delay exceeds a second predetermined threshold.

3. The device of claim 1 or 2, wherein the output signal comprises a plurality of data output signals, wherein each data output signal comprises data relating to a scrolling event for scrolling, via the output signal, on a display of a computer.

4. The device of claim 3, wherein the generated algorithm is configured to output the plurality of data output signals relating to the scrolling event for a longer time period than the rotation of the rotor, and wherein the generated algorithm is configured to output the plurality of data output signals relating to the scrolling event according to a linear artificial deceleration of the rotor.

5. The device of claim 3 or 4, wherein each of the plurality of data output signals comprises a multiplier relating to the scrolling event, wherein the multiplier relates to a number of pixels to be scrolled on the display of the computer per scrolling event, wherein the multiplier is based on the determined rotational velocity, wherein the rotational velocity is determined by the processor based on the received input signal, and wherein each of the plurality of data output signals comprises data based on the multiplier being applied to the scrolling event.

6. The device of claim 5, wherein there is a plurality of multipliers, wherein a first multiplier of the plurality of multipliers is based on the determined rotational velocity, and a second multiplier of the plurality of multipliers is less than the first multiplier, wherein the plurality of data output signals is output based on the second multiplier being applied to the scrolling event a predetermined time after the plurality of data output signals are output based on the first multiplier being first applied to the scrolling event, and wherein the predetermined time is based on the determined rotational velocity.

7. The device of claim 5 or 6, wherein the generated algorithm is configured to alter a first time period between an output of a first data output signal of the plurality of data output signals to which the multiplier has been applied and an output of a second data output signal of the plurality of data output signals to which the multiplier has been applied based on the determined rotational velocity.

8. The device of claim 7, when dependent on claim 6, wherein a second time period between an output of a penultimate data output signal of the plurality of data output signals relating to the first multiplier applied event and an output of a final data output signal of the plurality of data output signals relating to the first multiplier applied event is longer than a third time period between an output of a first data output signal of the plurality of data output signals relating to the second multiplier applied event and an output of a second data output signal of the plurality of data output signals relating to the second multiplier applied event.

9. The device of claim 8, wherein a difference between the second and third time periods is dependent on the first and second multipliers.

10. The device of any one of clams 3 to 9, wherein, for a time window during which a single multiplier is applied to the scrolling events comprised in the plurality of data output signals, a fourth time period between consecutive output signals increases with time.

11. The device of claims 4 to 10, wherein the plurality of data output signals is configured to initially output scrolling events based on a peak rotational velocity of the rotor, wherein the peak rotational velocity is determined by the processor based on the received input signal.

12. The device of any one of the preceding claims, further comprising a capacitive sensor coupled to or integral with the rotor, wherein the capacitive sensor is configured to sense a touch of a user, wherein the capacitive sensor is coupled to the processor, and wherein the algorithm is generated only when the capacitive sensor is not being touched by the user.

13. The device of claim 12, wherein the output signal is configured to stop being output if, during outputting of the output signal, the user touches the capacitive sensor.

14. The device of any one of the preceding claims, wherein the processor is configured to continue outputting the output signal based on the generated algorithm after the rotor has been determined, by the sensor, to have stopped rotating around the stator.

15. A method of generating an algorithm for outputting an output signal relating to a repetition of a scrolling event, the method comprising:
receiving by a processor, from a sensor, an input signal comprising input information from the sensor in relation to:
i) a detected movement of a rotor, in relation to a stator, from a first position, via a second position, to a third position, wherein the first, second and third positions are all different positions; and/or
ii) a detected transition from a first magnetic flux, via a second magnetic flux, to a third magnetic flux, wherein the rotor and the stator are configured to generate the first magnetic flux in the first position, the second magnetic flux in the second position, and the third magnetic flux in the third position, wherein the first magnetic flux differs from the second magnetic flux, wherein the second magnetic flux differs from the third magnetic flux, and wherein the first magnetic flux differs from the third magnetic flux;
determining, by the processor, a rotational velocity of the rotor based on the received input signal;
determining, by the processor, a deceleration of the rotor based on the received input signal after the rotational velocity determination;
generating, by the processor, an algorithm for outputting the output signal when the rotor is determined to be decelerating if the determined rotational velocity is above a predetermined threshold, wherein the output signal comprises output information about an artificial deceleration of the rotor, and wherein the artificial deceleration of the rotor is smaller than an actual deceleration of the rotor.
